# EUROPÄISCHE PATENTSCHRIFT

(11) **EP 2 057 382 B1**
(45) Veröffentlichungstag und Bekanntmachung des Hinweises auf die Patenterteilung: **30.11.2016**
(21) Anmeldenummer: 07817445.5
(22) Anmeldetag: 25.08.2007
(51) Int. Cl.: F16C 17/24, F16C 19/52, G01K 13/08, B23Q 11/14, B23Q 1/00, F16C 37/00, F16C 41/00, G01K 1/02

(54) **VORRICHTUNG ZUR ÜBERWACHUNG MINDESTENS EINER BETRIEBSGRÖSSE EINER LAGERANORDNUNG EINES WERKZEUGMASCHINENTISCHES**
APPARATUS FOR MONITORING AT LEAST ONE OPERATING VARIABLE OF A BEARING ARRANGEMENT FOR A MACHINE TOOL TABLE
DISPOSITIF DE SURVEILLANCE D'AU MOINS UNE GRANDEUR OPERATIONNELLE D'UN ARRANGEMENT DE PALIER D'UNE TABLE DE MACHINE-OUTIL

(30) Priorität: 31.08.2006 DE 102006040778
(43) Veröffentlichungstag der Anmeldung: 13.05.2009
(73) Patentinhaber: Schaeffler Technologies AG & Co. KG, 91074 Herzogenaurach (DE)
(72) Erfinder: SCHERF, Eugen, 97464 Niederwerm (DE); SCHLEIFENBAUM, Joachim, 97464 Niederwerrn (DE)
(86) Internationale Anmeldenummer: PCT/DE2007/001519
(87) Internationale Veröffentlichungsnummer: WO 2008/025335

(56) Entgegenhaltungen:
- EP-A- 1 607 720
- WO-A-02/01086
- DE-A1- 19 944 652
- US-A1- 2003 030 565

## Beschreibung

### Gebiet der Erfindung

Die Erfindung liegt auf dem Gebiet der Wälzlagertechnik für Werkzeugmaschinen - insbesondere für Werkstückrundtische von Drehmaschinen oder Fräsmaschinen, sowie kombinierten Dreh/Fräsmaschinen - und betrifft eine Vorrichtung zur Überwachung mindestens einer Betriebsgröße einer Lageranordnung eines Werkzeugmaschinentisches, der gegenüber eines ortsfesten Maschinengestell drehbar gelagert ist.

Bei Werkzeugmaschinen werden häufig Axial/Radiallager verwendet, die unter Vorspannung montiert sind. Durch von Direktantrieben auf die Lagerung ausgeübte Kräfte sowie durch betriebsgemäß auftretende Belastungen, beispielsweise thermische Belastungen, entstehen Materialbelastungen der Lagerkomponenten, die zur Sicherstellung eines störungsfreien Betriebs beobachtet und überwacht werden müssen. Entstehen beispielsweise durch die Belastungen signifikante Temperaturunterschiede zwischen dem inneren, mitdrehenden Lagerteil (so genannter Innenring) und dem äußeren, feststehenden Lagerteil (so genannter Außenring), kann diese Temperaturdifferenz zu einer unerwünschten Änderung der Lagervorspannung führen. Dies kann zu Schädigungen und ungünstigstenfalls zum Ausfall des Lagers führen.

Um dies zu vermeiden, sind (z.B. thermische) Kompensationen denkbar. Dazu müssen jedoch die aktuellen Betriebsgrößen (z.B. also die Temperaturen) von Innenring und Außenring ermittelt werden. Eine Betriebsgrößenmessung am ortsfesten Lagerteil (i. d. R. also am Außenring) ist problemlos möglich. Die Messung von Betriebsgrößen am mitdrehenden Lagerteil (also i. d. R. am Innenring) ist wegen der Energieversorgung des dazu erforderlichen Sensors oder Messfühlers und der Übertragung der Messergebnisse jedoch anspruchsvoller.

Grundsätzlich ist denkbar, einen Sensor über eine Batterie mit Energie zu versorgen; dies hat jedoch den Nachteil, dass wegen der endlichen Batterielebensdauer ein regelmäßiger Batteriewechsel notwendig ist. Dieser führt zu erheblichem Wartungsaufwand und erfordert einen Stillstand der Werkzeugmaschine, was sich auf den Fertigungsprozess störend auswirken kann.

Grundsätzlich wären auch optische oder Infrarotsysteme zur drahtlosen Betriebsgrößenmessung denkbar, die jedoch für die im Werkzeugmaschinenbereich anzutreffende schmutz- und ölhaltige Umgebung nicht zuverlässig und nicht mit angemessenem Aufwand praktikabel erscheinen.

Vor diesem Hintergrund besteht eine Aufgabe der vorliegenden Erfindung darin, eine Vorrichtung zur Überwachung mindestens einer Betriebsgröße einer Lageranordnung eines Werkzeugmaschinentisches anzugeben, die mit geringem Aufwand und ohne Beeinträchtigung des Normalbetriebs zuverlässig mindestens eine Kenn- oder Betriebsgröße des mitdrehenden Lagerteils überwacht und die Überwachungsergebnisse zur Weiterverarbeitung an eine ortsfeste Auswerte- oder Weiterverarbeitungseinrichtung übermittelt.

Diese Aufgabe wird erfindungsgemäß gelöst durch eine Vorrichtung mit den Merkmalen des Patentanspruchs 1.

Demgemäß weist die erfindungsgemäße Vorrichtung u. a. auf einen Sensor, der in unmittelbarer Nähe zu einem mitdrehenden Lagerteil des Werkzeugmaschinentisches angeordnet ist, eine Sendeeinheit, die sich an dem Werkzeugmaschinentisch befindet und die von dem Sensor gelieferte Sensorsignale als Messwerte drahtlos zu einem ortsfesten Empfänger übermittelt, und eine Energieversorgungseinheit mit einem ersten mitdrehenden und einem zweiten kooperierenden ortsfesten Generatorelement, die den Sensor und die Sendeeinheit mit der notwendigen Energie versorgt.

Ein wesentlicher Aspekt der Erfindung ist dabei die Applikation eines - durch die erfindungsgemäß vorgesehene Energieversorgungseinheit - energieautarken Sensors in unmittelbarer Nähe des mitdrehenden Lagerteils. Dadurch kann der Sensor sehr genaue Informationen über die Betriebsbedingungen und Betriebsgrößen des mitdrehenden Lagerteils liefern. Vorteilhafterweise können diese Informationen ohne die eingangs genannten Nachteile anderer denkbarer Messansätze gewonnen und übertragen werden. So ist insbesondere keine Batterie oder Verkabelung zwischen einer ortsfesten Energiequelle und dem Sensor bzw. der Sendeeinheit zur Energieversorgung erforderlich, weil beide Komponenten von der Energieversorgungseinheit energieautark versorgt sind.

Besonders bevorzugt ist die Erfindung bei dem Rundtisch einer Drehmaschine oder Fräsmaschine, insbesondere einer kombinierten Dreh/Fräsmaschine anwendbar.

Nach einer vorteilhaften Ausgestaltung der Erfindung ist der Sensor ein Temperatursensor, der besonders bevorzugt ein temperaturabhängiger elektrischer Widerstand ist.

Erfindungsgemäß repräsentieren die vom Sensor gelieferten Sensorsignale bzw. Messwerte die Ist-Größe für ein Regelungssystem zur Kompensation von betriebsgemäß auftretenden Lagerbelastungen. Dazu kann bevorzugt eine Signal-Aufbereitungseinheit vorgesehen sein, die die Sensorsignale weiter verarbeitet und daraus eine Stellgröße für eine aktive Beeinflussung einer Betriebsgröße, beispielsweise eine aktive Kühlung des mitdrehenden Lagerteils, generiert.

Ein besonderer Aspekt der Erfindung liegt auf der technisch einfachen und dennoch zuverlässigen Bereitstellung der für die Überwachung erforderlichen Energie der auf dem mitdrehenden Lagerteil bzw. Maschinentisch angeordneten Komponenten (zumindest Sensor und Sendeeinheit).

Vor diesem Hintergrund sieht eine bevorzugte Weiterbildung der Erfindung vor, dass das erste mitdrehende Generatorelement der Energieversorgungseinheit ein Wiegandelement ist und dass das zweite kooperierende Generatorelement von ortsfest angeordneten Magneten gebildet wird.

Um das Energiemanagement weiter zu optimieren, sieht eine vorteilhafte Ausgestaltung der Erfindung vor, dass das erste mitdrehende Generatorelement mit einem Energiespeicher verbunden ist, der erst bei Überschreiten eines vorgegebenen oder vorgebbaren Schwellwerts den Sensor zur Messung und die Sendeeinheit zur Signalübermittlung mit Energie beaufschlagt. Damit ist sichergestellt, dass sich auch bei vergleichsweise geringen für die Energiegewinnung zu Verfügung stehenden Ressourcen - wie z.B. sehr geringer Drehzahl des Maschinentisches - eine für die Messung und Übertragung der Messergebnisse ausreichende Energie akkumuliert.

Dies lässt sich nach einer bevorzugten Ausgestaltung der Erfindung realisieren, indem eine Schwellwertschaltung den Energiegehalt des Zwischenspeichers überwacht und bei Überschreiten des Schwellwerts einen Mikrokontroller aktiviert, der aus dem Sensorsignal bzw. den Messwerten ein Funktelegramm generiert, das an den ortfesten Empfänger gesendet wird.

Zur weiteren Optimierung des Energiebedarfs sieht eine weitere vorteilhafte Fortbildung der Erfindung vor, dass die Signalübermittlung zum ortsfesten Empfänger erst erfolgt, wenn die Messwerte einen vorgegebenen oder vorgebbaren Schwellwert überschreiten. Damit kann die Überwachung so ausgelegt werden, dass nur bei Eintreten anomaler Betriebszustände bzw. Auftreten unzulässiger Betriebsgrößen eine Übermittlung an den ortsfesten Empfänger erfolgt, womit dann ggf. durch eine angeschlossene Steuer- oder Regelschaltung - wie z.B. die oben beschriebene Signal-Aufbereitungseinheit - geeignete Gegenmaßnahmen eingeleitet werden.

Weitere Vorteile und Aspekte der Erfindung ergeben sich auch oder ergänzend aus der nachfolgenden Beschreibung der Erfindung unter Bezugnahme auf die Zeichnung. Dabei zeigen:
- Figur 1: schematisch im Längsschnitt eine bei der Lagerung eines Rundtisches gegenüber einem ortsfesten Maschinengestell einer Werkzeugmaschine realisierten erfindungsgemäßen Vorrichtung und
- Figur 2: schematisch einen Temperatursensor mit zugeordneter Sendeeinheit und deren Energieversorgung.

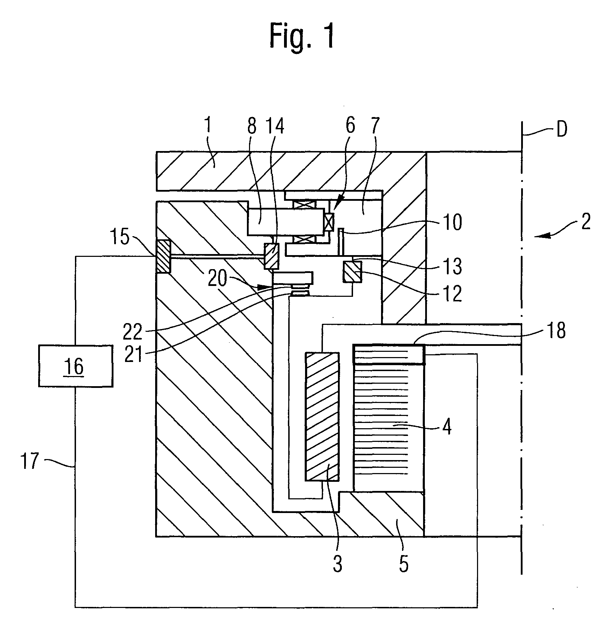

Figur 1 zeigt im Längsschnitt einen um eine vertikale Drehachse D rotierenden Rundtisch 1 einer kombinierten Dreh/Fräsmaschine 2, die nur andeutungsweise dargestellt und von der schematisch eine Antriebswicklung 3 und ein zugeordneter Stator 4 erkennbar ist.

Der Rundtisch 1 ist über Axial/Radiallager gegenüber einem feststehenden Maschinengestell 5 drehbar gelagert. Nachfolgend wird die Erfindung unter Fokussierung auf das Radiallager 6 beschrieben, wobei die Erfindung selbstverständlich auch zur Überwachung anderer Lager gleichermaßen geeignet ist.

Das Lager 6 weist einen Lagerinnenring 7 (mitdrehendes Lagerteil) und einen kooperierenden Lager-Außenring 8 (äußeres Lagerteil) auf. Direkt an der Laufbahn des Innenrings 7 ist ein Sensor 10 angeordnet, der in diesem Ausführungsbeispiel als Temperatursensor in Form eines Heißleiters ausgebildet ist und damit Temperaturwerte des Innenrings misst. Selbstverständlich könnten alternativ oder zusätzlich auch andere Sensoren für andere betriebsrelevante Messgrößen, beispielsweise wirkende Lagerkräfte, vorgesehen sein.

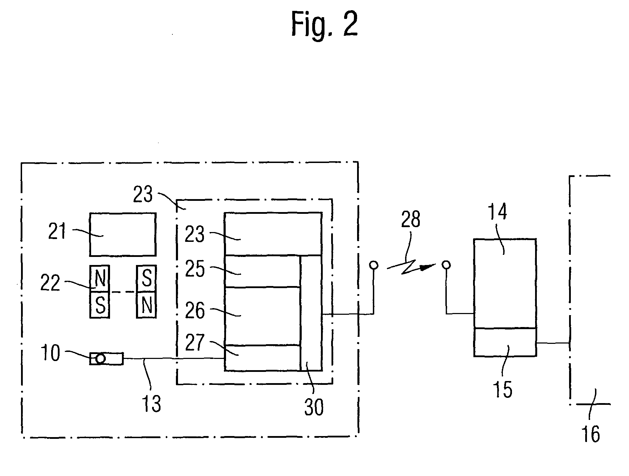

Der Sensor 10 ist ausgangseitig mit einer Sendeeinheit 12 verbunden, die die von dem Sensor als Sensorausgangssignale gelieferten Messgrößen 13 - nach nachfolgend noch detailliert im Zusammenhang mit der Figur 2 beschriebener Aufbereitung - an einen ortsfesten Empfänger 14 überträgt. Von dort werden die empfangenen Telegramme über eine Schnittstelle 15 einer Signal-Aufbereitungseinheit 16 zugeführt, die die empfangenen Messgrößen weiter verarbeitet. Die Signal-Aufbereitungseinheit fungiert hier als Regeleinheit und generiert aus den aus den Telegrammen extrahierten Messgrößen 13 eine Stellgröße 17 für eine aktive Beeinflussung der Betriebsgröße. Die Messgrößen 13 stellen somit den Ist-Wert dieser Regelschleife dar. Im vorliegenden Ausführungsbeispiel wird mit der Stellgröße 17 über eine nur schematisch angedeutete Kühleinrichtung 18 die aktive Kühlung des mitdrehenden Lagerteils geregelt.

Um den Sensor und die Sendeeinrichtung mit der betriebsnotwendigen Energie zu versorgen, ist eine Energieversorgungseinheit 20 vorgesehen, die ein an dem drehenden Rundtisch 1 angeordnetes Wiegandelement als erstes Generatorelement 21 und als zweites kooperierendes Generatorelement 22 Magneten umfasst, die an einem feststehenden Maschinenteil des Maschinengestells 5 fixiert sind.

Figur 2 zeigt, dass diese Magnete 22 abwechselnd polarisiert paarweise angeordnete Permanentmagnete sind. Bei Drehung des Rundtisches 1 bewegt sich das Wiegandelement 21 an den Magneten 22 vorbei, wodurch in an sich bekannter Weise Spannungs- bzw. Stromimpulse in dem Wiegandelement erzeugt werden, deren elektrische Energie einem Energiespeicher 23 innerhalb der Sendeeinheit 12 zugeführt wird.

An Stelle von Wiegandelementen können zur Energiegewinnung auch herkömmliche Generatorprinzipien wie z.B. Spulen mit Eisenkern eingesetzt werden.

Eine Schwellwertschaltung 25 misst den jeweiligen Energiegehalt - beispielsweise mittels Spannungsmessung - des Energiespeichers 23 und aktiviert bei Überschreiten eines vorgegebenen Schwellwerts einen Mikrokontroller 26. Dieser setzt das von dem Sensor 10 gelieferte, von einem A/D-Wandler 27 zunächst digitalisierte Sensorsignal (Messwert) 13 in ein Funktelegramm 28 um, das dann dem eigentlichen Hochfrequenz-Sender 30 zugeführt und von diesem an den ortsfesten Empfänger 14 übertragen wird. Von dort wird das empfangene Funktelegramm wie vorstehend schon beschrieben weitergeleitet, der Messwert extrahiert und der Signalaufbereitungseinheit 16 zur weiteren Verarbeitung und Regelung zugeführt.

Alternativ oder zusätzlich ist nach einer Variante der erfindungsgemäßen Vorrichtung vorgesehen, dass eine Aktivierung des Mikrokontrollers 26 und der nachfolgenden Signalaufbereitungs- und Übertragungsstufen 27, 30 nur dann erfolgt, wenn das Sensorsignal bzw. die Messwerte 13 einen vorgegebenen Wert überschreiten. Mit anderen Worten: Hier würde eine Messwertübertragung und ein ggf. Eingreifen der oben beschriebenen Signal-Aufbereitungseinheit bzw. Regeleinheit nur dann erfolgen, wenn der Messwert ein Verlassen zulässiger Betriebsbereiche indiziert.

### Bezugszeichenliste

- D: Längsdrehachse

- 1: Rundtisch
- 2: Fräsmaschine
- 3: Antriebswicklung
- 4: Stator
- 5: Maschinengestell
- 6: Radiallager
- 7: Lagerinnenring
- 8: Lageraußenring

- 10: Sensor
- 12: Sendeeinheit
- 13: Messwerte
- 14: Empfänger
- 15: Schnittstelle
- 16: Signal-Aufbereitungseinheit
- 17: Stellgröße
- 18: Kühleinrichtung

- 20: Energieversorgungseinheit
- 21: erstes Generatorelement
- 22: zweites Generatorelement
- 23: Energiespeicher
- 25: Schwellwertschaltung
- 26: Mikrokontroller
- 27: A/D-Wandler
- 28: Funktelegramm
- 30: Hochfrequenz-Sender

## Patentansprüche

1. Vorrichtung zur Überwachung mindestens einer Betriebsgröße einer Lageranordnung eines Werkzeugmaschinentisches (1), der gegenüber einem ortsfesten Maschinengestell (5) drehbar gelagert ist, mit
- einem Sensor (10), der unmittelbar an einem mitdrehenden Lagerteil (7) des Werkzeugmaschinentisches (1) angeordnet ist,
- einer Sendeeinheit (12), die sich an dem Werkzeugmaschinentisch (1) befindet und die von dem Sensor (10) gelieferten Messwerte (13) drahtlos zu einem ortsfesten Empfänger (14) übermittelt,
- einer Energieversorgungseinheit (20) mit einem ersten mitdrehenden (21) und einem zweiten kooperierenden ortsfesten Generatorelement (22), die den Sensor (10) und die Sendeeinheit (12) mit Energie versorgt,
- **dadurch gekennzeichnet, daß** die Messwerte (13) des Sensors (10) die Ist-Größe eines Regelungssystems zur Kompensation von betriebsgemäß auftretenden Lagerbelastungen repräsentieren, und
- wobei eine Signalaufbereitungseinheit (16) die Messwerte (13) weiter verarbeitet und daraus eine Stellgröße (17) für eine aktive Beeinflussung einer Betriebsgröße, insbesondere eine aktive Kühlung des mitdrehenden Lagerteils, generiert.

2. Vorrichtung nach Anspruch 1, wobei der Maschinentisch (1) ein Rundtisch einer Dreh/Fräsmaschine (2) ist.

3. Vorrichtung nach Anspruch 1 oder 2, wobei der Sensor (10) ein Temperatursensor ist.

4. Vorrichtung nach Anspruch 3, wobei der Temperatursensor (10) ein temperaturabhängiger elektrischer Widerstand ist.

5. Vorrichtung nach einem der vorangehenden Ansprüche, wobei das erste mitdrehende Generatorelement (21) der Energieversorgungseinheit (20) ein Wiegandelement ist und das zweite kooperierende Generatorelement (22) von ortsfest angeordneten Magneten gebildet ist.

6. Vorrichtung nach einem der vorangehenden Ansprüche, wobei das erste mitdrehende Generatorelement (21) mit einem Zwischenspeicher (23) verbunden ist, der erst bei Überschreiten eines vorgegebenen oder vorgebbaren Schwellwerts den Sensor (10) zur Messung und die Sendeeinheit (12) zur Signalübermittlung mit Energie beaufschlagt.

7. Vorrichtung nach Anspruch 8, wobei eine Schwellwertschaltung den Energiegehalt des Zwischenspeichers (25) überwacht und bei Überschreiten des Schwellwerts einen Mikrokontroller (26) aktiviert, der aus den Messwerten (13) des Sensors (10) ein Funktelegramm (28) generiert, das an den ortfesten Empfänger (14) gesendet wird.

8. Vorrichtung nach einem der vorangehenden Ansprüche, wobei die Signalübermittlung zum ortsfesten Empfänger (14) erst erfolgt, wenn die Messwerte (13) einen vorgegebenen oder vorgebbaren Schwellwert überschreiten.

## Claims

1. Apparatus for monitoring at least one operating variable of a bearing arrangement for a machine tool table (1), which is rotatably mounted with respect to a fixed machine frame (5), comprising
- a sensor (10), which is arranged directly on a co-rotating bearing part (7) of the machine tool table (1),
- a transmitting unit (12), which is located on the machine tool table (1) and wirelessly transmits the measured values (13) provided by the sensor (10) to a fixed receiver (14),
- a power supply unit (20), which has a first co-rotating generator element (21) and a second co-operating fixed generator element (22) and supplies power to the sensor (10) and the transmitting unit (12),
**characterized in that**
- the measured values (13) of the sensor (10) represent the actual value of a control system for compensating for operationally occurring bearing loads, and
- a signal conditioning unit (16) further processes the measured values (13) and generates from them a manipulated variable (17) for actively influencing an operating variable, in particular active cooling of the co-rotating bearing part.

2. Apparatus according to Claim 1, the machine table (1) being a turntable of a turning/milling machine (2).

3. Apparatus according to Claim 1 or 2, the sensor (10) being a temperature sensor.

4. Apparatus according to Claim 3, the temperature sensor (10) being a temperature-dependent electrical resistor.

5. Apparatus according to one of the preceding claims, the first co-rotating generator element (21) of the power supply unit (20) being a Wiegand element and the second co-operating generator element (22) being formed by fixedly arranged magnets.

6. Apparatus according to one of the preceding claims, the first co-rotating generator element (21) being connected to a buffer store (23), which only supplies power to the sensor (10) for measuring and the transmitting unit (12) for signal transmission when a predetermined or predeterminable threshold value is exceeded.

7. Apparatus according to Claim 8, a threshold circuit monitoring the energy content of the buffer store (25) and, when the threshold value is exceeded, activating a microcontroller (26), which generates from the measured values (13) of the sensor (10) a radiogram (28), which is sent to the fixed receiver (14).

8. Apparatus according to one of the preceding claims, the signal transmission to the fixed receiver (14) only taking place when the measured values (13) exceed a predetermined or predeterminable threshold value.

## Revendications

1. Dispositif de surveillance d'au moins une grandeur de fonctionnement d'un système de pallier d'une table de machine-outil (1) qui est montée de manière à pouvoir tourner par rapport à un bâti de machine (5) en position fixe, comportant
- un capteur (10) qui est disposé directement sur une partie formant palier en rotation simultanée (7) de la table de machine-outil (1),
- une unité émettrice (12) qui se trouve sur la table de machine-outil (1) et qui transmet sans fil des valeurs de mesure (13) délivrées par le capteur (10) à un récepteur fixe (14),
- une unité d'alimentation en énergie (20) comprenant un premier élément générateur (21) en rotation simultanée et un deuxième élément générateur (22) en position fixe qui coopère, laquelle unité d'alimentation en énergie alimente en énergie le capteur (10) et l'unité émettrice (12),
- **caractérisé en ce que** les valeurs de mesure (13) du capteur (10) représentent la grandeur instantanée d'un système de régulation destiné à compenser les charges de palier apparaissant lors du fonctionnement, et
- dans lequel une unité de traitement de signaux (16) soumet à un traitement supplémentaire les valeurs de mesure (13) et génère à partir de celles-ci une grandeur de réglage (17) destinée à agir activement sur une grandeur de fonctionnement, notamment un refroidissement actif de la partie formant palier en rotation simultanée.

2. Dispositif selon la revendication 1, dans lequel la table de machine-outil (1) est une table ronde d'un tour ou d'une fraiseuse (2).

3. Dispositif selon la revendication 1 ou 2, dans lequel le capteur (10) est un capteur de température.

4. Dispositif selon la revendication 3, dans lequel le capteur de température (10) est une résistance électrique dépendant de la température.

5. Dispositif selon l'une quelconque des revendications précédentes, dans lequel le premier élément générateur en rotation simultanée (21) de l'unité d'alimentation en énergie (20) est un élément de Wiegand et en ce que le deuxième élément générateur (22) qui coopère est formé par des aimants disposés en position fixe.

6. Dispositif selon l'une quelconque des revendications précédentes, dans lequel le premier élément générateur en rotation simultanée (21) est connecté à un accumulateur tampon (23) qui, dès qu'une valeur de seuil prédéterminée ou pouvant être prédéterminée est dépassée, délivre de l'énergie au capteur (10) pour la mesure et à l'unité émettrice (12) pour la transmission de signaux.

7. Dispositif selon la revendication 8, dans lequel un circuit de valeur de seuil surveille l'énergie accumulée dans l'accumulateur tampon (25) et lorsque la valeur de seuil est dépassée, active un microcontrôleur (26) qui génère à partir des valeurs de mesure (13) du capteur (10) un télégramme radio (28) envoyé au récepteur fixe (14).

8. Dispositif selon l'une quelconque des revendications précédentes, dans lequel la transmission de signaux au récepteur fixe (14) n'est effectuée que lorsque les valeurs de mesure (13) dépassent une valeur de seuil prédéterminée ou pouvant être prédéterminée.
